# EUROPEAN PATENT SPECIFICATION

(11) **EP 1 623 617 B1**
(45) Date of publication and mention of the grant of the patent: **24.10.2007**
(21) Application number: 05016652.9
(22) Date of filing: 01.08.2005
(51) Int. Cl.: A01D 45/06

(54) **A machine for reaping hemp and similar plants**
Maschine zum Mähen von Hanf oder dergleichen
Machine pour couper chanvre et plantes similaires

(30) Priority: 05.08.2004 IT BO20040506
(43) Date of publication of application: 08.02.2006
(73) Proprietor: Gruppo Fibranova S.r.l., 57123 Livorno (IT)
(72) Inventor: Tofani, Cesari, 56035 Lari (Livorno) (IT)
(74) Representative: Lanzoni, Luciano

(56) References cited:
- EP-A- 0 205 418
- WO-A-01/39590
- DE-A1- 10 042 867

## Description

The present invention relates to the agricultural machinery sector and in particular to machines used to reap hemp, linen and similar plants and deposit the cut plants in swathes so that the plant stems or stalks are kept parallel to each other.

During the reaping of hemp, the cut plants are deposited in parallel swathes in order to facilitate efficient drying of the plants and their subsequent collection with machines such as rotary balers.

At the present time, traditional machines, known as reaper-binders, are used to cut the hemp and convey the cut stalks onto an inclined surface, keeping the stalks or stems parallel to each other. These machines bundle and bind the stalks before ejecting them mechanically from the machine; the bound bundles are then stacked in sheaves by hand so that they can dry.

The drawbacks of these machines include the fact that they require manual operations. There is also no way of controlling the length of the cut stalks with the result that the stalks are bound together in bundles which are not of an uniform size.

This drawback is particularly felt in the sector growing hemp for the textile industry. Here the bundles must be of fairly uniform dimensions in order to facilitate the subsequent stage of the process, known as scutching, in order to obtain a fibre which can be used in textile making.

There are also hemp reaping machines which cut the plants, slice the stalks into small segments and then deposit these in swathes.

A machine of this type is described in the German patent DE10042867.

This machine has the drawback that the cut hemp stalks are dropped singly onto the ground in swathes which are approximately parallel to the direction of travel of the machine or the reaping direction.

This drawback makes it impossible in the subsequent process stages to employ the scutching machines used to obtain long fibres. Scutching machines require that the cut hemp stalks be deposited in order, parallel to each other and at right angles to the reaping direction. At the present time there are machines, of both the self-propelled and towed types, designed for harvesting linen. These machines uproot the plants from the ground, rotate them and then deposit them, parallel to each other, in swathes at right angles to the direction of reaping.

However, these machines, are not suitable for harvesting hemp plants which are considerably longer (approximately 2.5 metres) than linen (average length 1 to 1.5 metres) and are not suitable for harvesting by uprooting. There is a considerable demand for machines and methods which mechanise as far as possible the reaping, drying, collection and baling of hemp plants for textile industry uses.

From Wo 0139590 it is known a method and a machine of hemp harvesting consisting in cutting up the hemp stems into sections and spreading the stem sections in layers on the plantation directly after harvesting.

The primary aim of the present invention is to overcome the drawbacks described by means of a machine for reaping hemp plants and depositing them in swathes arranged perpendicular to the direction of reaping.

The invention achieves this aim by means of the machine described in claim 1 below.

The advantages of the invention include the possibility of a higher degree of mechanization in hemp reaping, plant cutting, intermediate turning during drying and rotary baling of the dried stalks.

Further advantages of the invention are obtained by a machine according to the dependent claims below which make special reference to the conveying and cutting of stalks through the use of cylinders.

Yet further advantages are obtained by means of machines or cutting devices fitted to existing machines as described in the claims 12 and 13 and which cut the hemp stalks for a second time into two equal segments which can then be scutched in machines designed for linen. The technical characteristics of the invention, with reference to the above aims, are clearly described in the claims below and its advantages are apparent from the detailed description which follows, and from the accompanying drawings which illustrate an embodiment of the invention provided merely by way of example without limiting the scope of the invention as defined in the appended claims, and in which:
- Figure 1 is a diagram of the machine according to the invention as seen from above;
- Figure 2 is a diagrammatic view showing plant conveying with the machine in Figure 1;

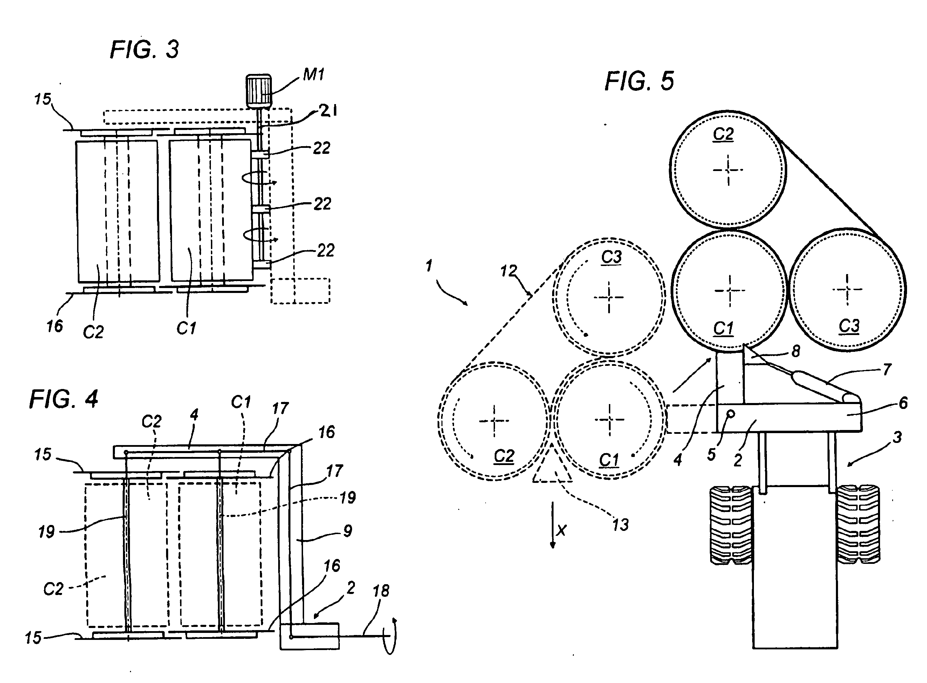

- Figure 3 is a detailed diagrammatic view showing the reaping cylinder drive system of the machine in Figure 1;
- Figure 4 is a detailed diagrammatic view showing the cutting disc in Figure 1;
- Figure 5 is a diagram showing the operating position (dashed line) and the inoperative position (continuous line) of the machine in Figure 1;
- Figure 6 shows an embodiment of the machine according to the present invention.

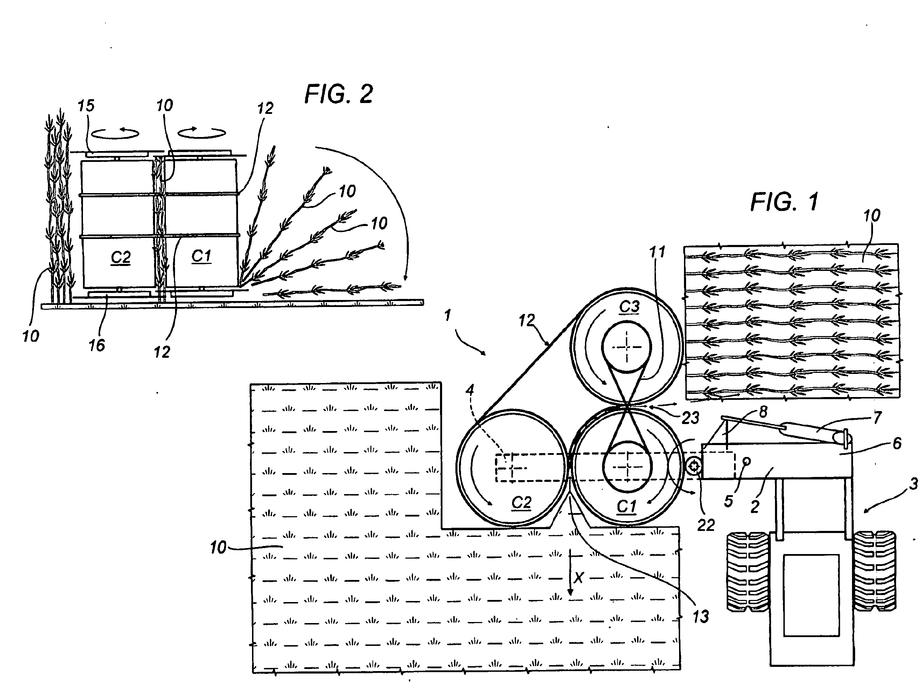

The attached drawings show a preferred but not exclusive embodiment of the invention consisting of a machine 1 for reaping hemp comprising the following:
- a frame 2 for coupling to a tractor 3, preferably fitted with a cross beam 4 supported by an upright 9 and attached by a joint pin 5 to a fixed section 6 of the tractor 3. The fixed section 6 carries an actuator 7 which at its other end engages with the lever 8 of the cross beam 4 so as to enable the cross beam 4 to pass backwards and forwards between a swung-out side operating position (show by a dashed line in Figure 4) outside the front silhouette of the tractor during forward travel in the reaping direction X, and a non-operative transport position substantially inside the front silhouette of the tractor;
- a pair of vertical cylinders C1 and C2, alongside each other and aligned along a plane at right angles to the reaping direction X. The cylinders C1, C2 are counter rotating, in the direction indicated by the arrows in Figure 1, so that the plants 10 are guided onto the front-facing side, with respect to the reaping direction X, and fed into the machine;
- a third cylinder C3 alongside the cylinder C1 and aligned with this on a plane parallel to the reaping direction X. The cylinder C3 and the cylinder C1 are also counter rotating with respect to each other and are connected by means of a crossed drive belt 11; the cylinders C2 and C3 rotate in the same direction. These two cylinders are connected by one or more belts 12 stretched between the two cylinders C2, C3 and which make contact on the outside with the cylinder C1; this arrangement together with the surfaces of the first cylinder C1 creates a guide channel for the plants 10 being processed;
- a drive unit for the cylinders C1 to C3 comprising a motor M1, preferably a hydraulic motor powered by the hydraulic circuit of a tractor 3, driving the shaft 21 which in turn engages with the outside surface of the cylinder C1 by means of a clutch device 22;
- two pairs of blades 15, 16, preferably disc blades, positioned above and below the two cylinders C1, C2, which cut the plants to size. The blades 15, 16 are driven by a transmission 17 which is powered by a power take-off 18, shown diagrammatically in Figure 4, such as the power take-off of the tractor 3; power is transmitted to the blades 15, 16 by axles 19 passing centrally in the cylinders C1, C2.

During operation, the tractor 3 travels in the reaping direction X towing the machine 1 mounted on the frame 2 in the swung-out side operating position.

During forward travel, the motor M1 drives the cylinders C1 to C3 at a peripheral speed which is equal to the forward travel speed so that the plants 10 are fed by the front cylinders C1, C2 into the channel 13 without build-ups or delays.

The blades 15, 16, driven by the transmission 17, cut the plants fed into the channel 13 at two levels, one lower and one upper or at the top, so that the hemp stalks are cut to a uniform length, preferably 220 cm.

After cutting, the plants 10 are conveyed between the belts 12 and the surface of the roller C1 towards the outfeed zone 23 where the plants 10 are drawn between the counter rotating cylinders C1 and C3.

The contact area between the belts 12 and the cylinder C1 preferably extends from the plant infeed point to the plant outfeed zone so as to define a curved path with an angle of approximately 90° thus forcing the plants through a corresponding change of direction with the result that the plants 10 are deposited on the ground in swathes at right angles to the reaping direction X.

Once the process has been completed, the cylinders C1, C2, C3 can moved to the retracted, inoperative position ready for transport with the tractor 3.

A further advantage of the invention is that, with the cut plants already laid out in crossways swathes, processing can continue with mechanised methods and using conventional agricultural machinery.

It would be possible, for example, in the subsequent stages of the process, to use a device which raises the stalks from the ground, keeping them parallel to each other, and then cuts them in half and deposits them, turned over where possible, on the ground again so that drying can be completed. This device could be attached to the front of existing machines designed to turn over swathes of linen in fields. It could also be fitted to a special tractor-mounted implement of this type. It would be possible to turn the stalks over during drying and then bale the dried plants ready for use in the hemp industry. Baling could be performed by a linen rotary baler where the parallel alignment of the stalks is maintained and where each turn of material is separated from the previous one by two cords.

The machine described in the invention according to claim 1 refers to an embodiment where the plants are reaped and conveyed using counter rotating cylinders. It is also within the bounds of the invention to include hemp reaper-binders (such as those manufactured Beshetzk) as defined in claim 12. Instead of binding the stalks in bundles, this device would cut the stalks conveyed on the inclined collection surface into two equal segments and then convey these segments in two separate and contiguous swathes while ensuring that the stalks are kept aligned parallel to each other.

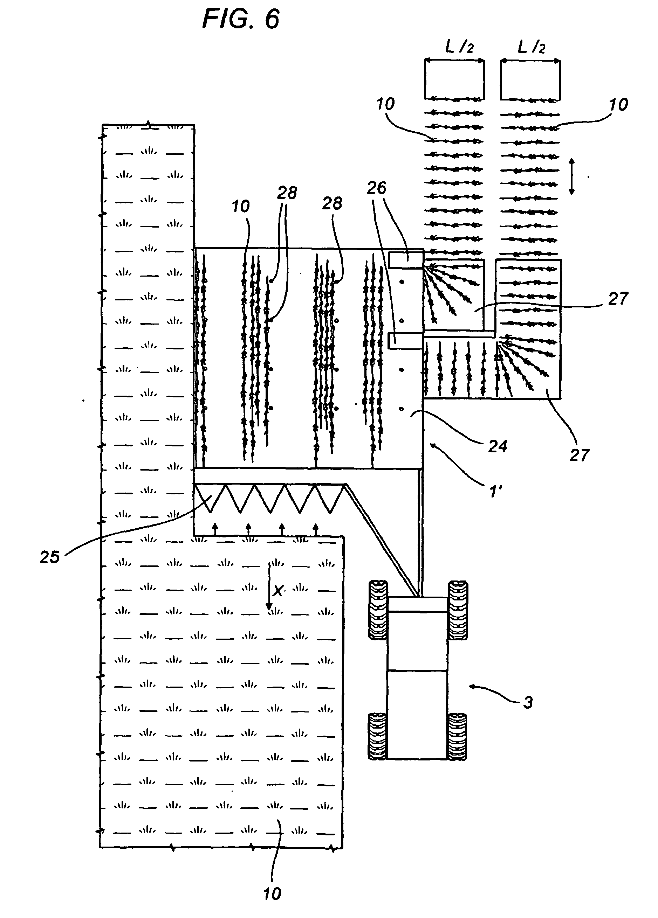

Figure 6 shows an example where the machine 1' is fitted with an inclined loading surface 24 towed by a tractor 3 in the reaping direction X and also fitted on its front lower section with a cutting device 25 such as a scythe.

Once they have been cut, the plants 10 are laid on the surface 24 and are conveyed by parallel rows of conveyor guides 28 projecting above the surface 24 and moving crossways to the direction X; these guides hold the plants in order to allow the blades (for example of the disc type) to cut the stalks to size to a length L and then to cut the stalks into two segments of length L/2.

In another embodiment of the invention, the plant segments 10 are conveyed from the surface 24 to the ground by chutes 27, offset with respect to each other, which continuously intercept the plants conveyed by the guides 28 and convey the plants 10 in two parallel rows in a direction at right angles to the direction X.

In the present description of the invention, reference is made mainly to machines designed to be towed by tractors. The same technical design of the invention can be applied to self-propelled machines and in particular to those machines where multiple functions are performed on a single machine.

In another advantageous embodiment it would be possible to lay the cut plants out in right angle swathes on a surface of the machine rather than on the ground so other operations, such as scutching of the stalks, could be performed on the machine.

The invention described here is clearly suitable for industrial applications; it can also be subject to numerous modifications and variants all of which fall within the scope of the invention as defined in the appended claims; all details can be substituted by technically equivalent elements.

## Claims

1. A machine for reaping hemp and similar fibrous plants (10) comprising a first means for cutting plants and feeding them into the machine in the reaping direction (X), outfeed means (12, C3) for conveying the cut plants (10) from the reaping direction to an outfeed direction at right angles to the direction of reaping and depositing them on the ground in parallel swathes at right angles to the direction of reaping,
**characterised in that** the first cutting and infeed means comprise a pair of vertical cylinders (C1, C2) arranged on the same plane perpendicular to the reaping direction (X) and counter rotating in a mutually convergent direction to feed the plants into the machine.

2. A machine according to claim 1, **characterised in that** the cylinders (C1, C2) are fitted with upper and lower blades (15, 16) for cutting the plants to size.

3. A machine according to one or more of the foregoing claims, **characterised in that** the -outfeed means comprise a third vertical cylinder (C3) whose axis of rotation is on the same plane parallel to the reaping direction (X) as the axis of rotation of the first cylinder of the pair of reaping cylinders (C1, C2), and which in turn is counter rotating and convergent with respect to the first cylinder (C1) so as to convey the cut plants (10) in a direction at right angles to the reaping direction (X).

4. A machine according to one or more of the foregoing claims, **characterised in that** the conveying means have a peripheral speed which is regulated to be equal to the forward travel speed of the machine.

5. A machine according to one or more of the foregoing claims 3-4, **characterised in that** the conveying means comprise a pair of drive belts (12) stretched between the third cylinder (C3) and the second of the reaping cylinders (C2) so as to define, in combination with the surface of the first cylinder (C1) , a guide channel (13) for the stalks from the reaping zone to the outfeed zone (23).

6. A machine according to one or more of the foregoing claims 2-5, **characterised in that** the upper and lower blades (15, 16) are spaced apart to enable the cutting to size of the stalks.

7. A machine according to one or more of the foregoing claims 5-6, **characterised in that** the machine has a single motor (M1) driving the cylinders and driving belts (11, 12) transmitting drive from one cylinder to another.

8. **A** machine according to one or more of the foregoing claims 2-7**, characterised in that** the machine has independent power transmission means (17) driving the cutting blades.

9. A machine according to one or more of the foregoing claims, **characterised in that** the machine comprises a load-bearing frame (2), which can be coupled to and transported on the structure of a tractor (3).

10. A machine according to claim 9, **characterised in that** the frame comprises an arm (6) fixed to the tractor structure so that the machine (1) projects from one side of the tractor.

11. A machine according to claim 10, **characterised in that** the arm (6) is jointed to enable the machine to be retracted inside the longitudinal dimensions of the tractor to the inoperative, transport position.

12. A machine for reaping hemp and similar fibrous plants, **characterised in that** the machine has a loading surface (24) fitted with a front cutting device (25) and conveying guides (28) which hold the plants and convey them crossways over one or more cutting blades; the means for conveying the cut plants (10) consist of one or more chutes (27) which continuously intercept the plants conveyed by the guides (28) and convey the plants (10) in offset parallel rows in a direction at right angles to the direction X.

13. A method for the mechanised reaping of hemp, comprising the stages of involving mechanical means for cutting hemp plants (10) along the reaping direction X and mechanical means for conveying the cut plants from the direction X to a direction at right angles to this, the plants being cut to size during conveying and divided into equal lengths before being deposited in swathes along offset parallel rows in a direction at right angles to the direction X.

## Patentansprüche

1. Maschine zum Ernten von Hanf und ähnlichen faserigen Pflanzen (10), umfassend erste Mittel zum Schneiden von Pflanzen und zum Zuführen derselben in Ernterichtung (X) in die Maschine, Ausgabemittel (12, C3) zum Transportieren der geschnittenen Pflanzen (10) von der Ernterichtung in eine Ausgaberichtung im rechten Winkel zur Ernterichtung und zum Ablegen derselben in parallelen Mähschwaden auf dem Boden im rechten Winkel zur Ernterichtung, **dadurch gekennzeichnet, dass** die ersten Schneide- und Zuführmittel ein Paar vertikale Zylinder (C1, C2) umfassen, die in derselben Ebene senkrecht zur Ernterichtung (X) angeordnet sind und sich gegenläufig zueinander in zusammenlaufender Richtung drehen, um die Pflanzen der Maschine zuzuführen.

2. Maschine nach Anspruch 1, **dadurch gekennzeichnet, dass** die Zylinder (C1, C2) mit einer oberen und einer unteren Klinge (15, 16) zum Zuschneiden der Pflanzen auf Maß ausgestattet sind.

3. Maschine nach einem oder mehreren der vorangehenden Ansprüche, **dadurch gekennzeichnet, dass** die Ausgabemittel einen dritten vertikalen Zylinder (C3) umfassen, dessen Rotationsachse sich auf derselben Ebene parallel zur Ernterichtung (X) wie die Rotationsachse des ersten Zylinders des Paars von Erntezylindern (C1, C2) befindet, und der sich wiederum in Bezug auf den ersten Zylinder (C1) gegenläufig und zusammenlaufend dreht, um die geschnittenen Pflanzen (10) in eine Richtung im rechten Winkel zur Ernterichtung (X) zu befördern.

4. Maschine nach einem oder mehreren der vorangehenden Ansprüche, **dadurch gekennzeichnet, dass** die Beförderungsmittel eine Umfangsgeschwindigkeit aufweisen, die so geregelt ist, dass sie gleich der Geschwindigkeit der Vorwärtsbewegung der Maschine ist.

5. Maschine nach einem oder mehreren der vorangehenden Ansprüche 3 bis 4, **dadurch gekennzeichnet, dass** die Beförderungsmittel ein Paar Antriebsriemen (12) umfassen, die zwischen dem dritten Zylinder (C3) und dem zweiten der Erntezylinder (C2) aufgespannt sind, so dass sie in Kombination mit der Fläche des ersten Zylinders (C1) von der Erntezone bis zu der Ausgabezone (23) einen Führungskanal (13) für die Stängel bilden.

6. Maschine nach einem oder mehreren der vorangehenden Ansprüche 2 bis 5, **dadurch gekennzeichnet, dass** die obere und die untere Klinge (15, 16) beabstandet sind, um das Zuschneiden der Stängel auf Maß zu ermöglichen.

7. Maschine nach einem oder mehreren der vorangehenden Ansprüche 5 bis 6, **dadurch gekennzeichnet, dass** die Maschine einen einzelnen Motor (M1) aufweist, der die Zylinder und die Antriebsriemen (11, 12) antreibt, die den Antrieb von Zylinder zu Zylinder übertragen.

8. Maschine nach einem oder mehreren der vorangehenden Ansprüche 2 bis 7, **dadurch gekennzeichnet, dass** die Maschine unabhängige Getriebemittel (17) aufweist, die die Schneideklingen antreiben.

9. Maschine nach einem oder mehreren der vorangehenden Ansprüche, **dadurch gekennzeichnet, dass** die Maschine einen Lasttragerahmen (2) aufweist, der an den Aufbau eines Traktors (3) gekoppelt und daran transportiert werden kann.

10. Maschine nach Anspruch 9, **dadurch gekennzeichnet, dass** der Rahmen einen Arm (6) umfasst, der an dem Traktoraufbau befestigt ist, so dass die Maschine (1) von einer Seite des Traktors vorspringt.

11. Maschine nach Anspruch 10, **dadurch gekennzeichnet, dass** der Arm (6) ein Gelenk aufweist, damit die Maschine in die Längsabmessungen des Traktors in die ruhende Transportposition zurückgezogen werden kann.

12. Maschine zum Ernten von Hanf und ähnlichen fasrigen Pflanzen, **dadurch gekennzeichnet, dass** die Maschine eine Ladefläche (24) aufweist, die mit einer vorderen Schneidevorrichtung (25) und Förderführungen (28) ausgestattet ist, die die Pflanzen halten und sie quer über eine oder mehrere Schneideklingen befördern; wobei die Mittel zum Befördern der geschnittenen Pflanzen (10) aus einer oder mehreren Rinnen (27) bestehen, die die Pflanzen, welche von den Führungen (28) befördert werden, fortlaufend abfangen und die Pflanzen (10) in beabstandeten parallelen Reihen in einer Richtung im rechten Winkel zu der Richtung X befördern.

13. Verfahren zum mechanisierten Ernten von Hanf, umfassend die Stufen des Einbeziehens mechanischer Mittel zum Schneiden von Hanfpflanzen (10) entlang der Ernterichtung X und mechanischer Mittel zum Befördern der geschnittenen Pflanzen von der Richtung X zu einer Richtung im rechten Winkel zu dieser, wobei die Pflanzen während des Beförderns auf Maß zugeschnitten werden und in Abschnitte gleicher Länge geteilt werden, bevor sie in Mähschwaden entlang beabstandeter paralleler Reihen in einer Richtung im rechten Winkel zur Richtung X abgelegt werden.

## Revendications

1. Une machine pour moissonner le chanvre et plantes fibreuses (10) similaires comprenant des premiers moyens pour la coupe des plantes et leur alimentation dans la machine selon la direction de moissonnage (X), des moyens de sortie (12, C3) pour transférer les plantes coupées (10) de la direction de moissonnage à une direction de sortie perpendiculaire à ladite direction de moissonnage et les déposer sur le sol en andains parallèles perpendiculaires à la direction de moissonnage, ladite machine étant **caractérisée en ce que** les premiers moyens de coupe et d'alimentation comprennent une paire de cylindres verticaux (C1, C2) disposés sur le même plan perpendiculaire à la direction de moissonnage (X) et contre-tournant dans un sens réciproquement convergent pour alimenter les plantes dans la machine.

2. La machine selon la revendication 1, **caractérisée en ce que** les cylindres (C1, C2) sont équipés de lames supérieures et inférieures (15, 16) pour la coupe à mesure des plantes.

3. La machine selon une ou plusieurs des revendications précédentes, **caractérisée en ce que** les moyens de sortie comprennent un troisième cylindre vertical (C3) dont l'axe de rotation est sur le même plan parallèle à la direction de moissonnage (X) que l'axe de rotation du premier cylindre de la paire de cylindres de moissonnage (C1, C2), et qui est à son tour en contre-rotation et convergent par rapport au premier cylindre (C1) de manière à transférer les plantes coupées (10) dans une direction perpendiculaire à la direction de moissonnage (X) .

4. La machine selon une ou plusieurs des revendications précédentes, **caractérisée en ce que** les moyens de transfert ont une vitesse périphérique qui est réglée de manière à être égale à la vitesse d'avancement de la machine.

5. La machine selon une ou plusieurs des revendications précédentes 3 et 4, **caractérisée en ce que** les moyens de transfert comprennent une paire de courroies d'entraînement (12) tendues entre le troisième cylindre (C3) et le deuxième (C2) des cylindres de moissonnage de manière à définir, en association avec la surface du premier cylindre (C1), un canal (13) de guidage des tiges de la zone de moissonnage à la zone de sortie (23).

6. La machine selon une ou plusieurs des revendications de 2 à 5, **caractérisée en ce que** les lames supérieures et inférieures (15, 16) sont espacées pour permettre la coupe à mesure des tiges.

7. La machine selon une ou plusieurs des revendications précédentes 5 et 6, **caractérisée en ce qu'**elle comprend un moteur unique (M1) entraînant les cylindres et entraînant les courroies (11, 12) de transmission du mouvement d'un cylindre à l'autre.

8. La machine selon une ou plusieurs des revendications précédentes de 2 à 7, **caractérisée en ce qu'**elle comprend des moyens indépendants de transmission du mouvement (17) pour l'entraînement des lames de coupe.

9. La machine selon une ou plusieurs des revendications précédentes, **caractérisée en ce qu'**elle comprend un châssis portant (2) qui peut être accouplé avec et transporté sur la structure d'un tracteur (3).

10. La machine selon la revendication 9, **caractérisée en ce que** le châssis comprend un bras (6) fixé à la structure du tracteur de manière à ce que la machine (1) dépasse d'un côté du tracteur.

11. La machine selon la revendication 10, **caractérisée en ce que** le bras (6) est articulé pour que la machine puisse être rentrée dans les dimensions longitudinales du tracteur, dans la position non opérationnelle de transport.

12. La machine pour moissonner le chanvre et plantes fibreuses similaires, **caractérisée en ce qu'**elle comprend une surface de chargement (24) équipée d'un dispositif frontal de coupe (25) et de guides de transport (28) qui retiennent les plantes et les transfèrent transversalement sur une ou plusieurs lames de coupe ; les moyens de transfert des plantes coupées (10) consistent en une ou plusieurs goulottes (27) qui interceptent en continu les plantes transférées par les guides (28) et transfèrent ces mêmes plantes (10), en rangées parallèles décalées, dans une direction perpendiculaire à la direction (X).

13. Une méthode pour le moissonnage mécanisé du chanvre, comprenant les phases consistant à prévoir des moyens mécaniques pour la coupe des plantes de chanvre (10) le long de la direction de moissonnage (X) et à prévoir des moyens mécaniques pour le transfert des plantes coupées de la direction (X) à une direction qui est perpendiculaire à ladite direction (X), les plantes étant coupées à mesure durant le transfert et divisées en longueurs égales avant d'être déposées en andains selon des rangées parallèles décalées dans une direction perpendiculaire à la direction (X).
